# EUROPEAN PATENT APPLICATION

(11) **EP 4 815 245 A1**
(43) Date of publication of application: **30.09.2026**
(21) Application number: 24906463.5
(22) Date of filing: 19.12.2024
(51) Int. Cl.: H02J 3/38, H02M 1/32, H02M 1/44

(54) **POWER TRANSMISSION SYSTEM AND POWER GENERATION SYSTEM**

(30) Priority: 19.12.2023 CN 202311760323
(71) Applicant: Huawei Technologies Co., Ltd., Shenzhen, Guangdong 518129 (CN)
(72) Inventor: ZHANG, Xiaowei, Shenzhen, Guangdong 518129 (CN); HU, Haoyi, Shenzhen, Guangdong 518129 (CN); WANG, Dechen, Shenzhen, Guangdong 518129 (CN)
(74) Representative: Gill Jennings & Every LLP
(86) International application number: PCT/CN2024/140685
(87) International publication number: WO 2025/130988

(57) **Abstract**

Embodiments of this application provide a power transmission system and a power generation system. The power transmission system includes: a power conversion circuit, configured to perform power conversion on an input electrical signal; a filter circuit, including a first filter circuit and a second filter circuit, where the first filter circuit is coupled between an input end of the power transmission system and an input end of the power conversion circuit, and the second filter circuit is coupled between an output end of the power conversion circuit and an output end of the power transmission system; and at least one crossover capacitor group, where one end of the crossover capacitor group is coupled to the input end of the power transmission system, and the other end of the crossover capacitor group is coupled to the output end of the power transmission system, to form a loop, so that an interference signal in an electrical signal output by the output end of the power conversion circuit can return to the input end of the power conversion circuit. In embodiments of this application, the interference signal can return, which reduces a common-mode interference current at the input end and/or a common-mode interference current at the output end, and a safety Y capacitor is not required, so that a volume of a filter inductor can be reduced, and costs are reduced.

## Description

This application claims priority to Chinese Patent Application No. 202311760323.6, filed with the China National Intellectual Property Administration on December 19, 2023 and entitled "POWER TRANSMISSION SYSTEM AND POWER GENERATION SYSTEM", which is incorporated herein by reference in its entirety.

### TECHNICAL FIELD

This application relates to the field of filtering technologies, and in particular, to a power transmission system and a power generation system.

### BACKGROUND

Due to a large quantity of strings in market application of power optimizer products, a voltage of a cable connected to the string to ground after multi-stage series connection may reach over 500 V. Common-mode filtering requires use of a safety Y capacitor for filtering a housing, and a current electromagnetic compatibility (electromagnetic compatibility, EMC) standard requires that all ports of a power supply device need to be connected to a line impedance stabilization network (line impedance stabilization network, LISN), which causes interference return in input and output. Based on noise analysis of a floating ground device with a non-isolated architecture, a test result of connecting two ports to the LINS shows a degradation of over 20 dB compared to a test result of connecting a single port to the LISN. In addition, conventional EMC filtering is limited by a safety requirement, and a capacitance value of a Y capacitor needs to be excessively small. Therefore, an inductance value of a common-mode inductor needs to be large, which results in a large volume. Because a size of an optimizer is excessively small, the common-mode inductor of this magnitude has great impact on an architecture and costs of the product.

### SUMMARY

Embodiments of this application provide a power transmission system and a power generation system. A crossover capacitor group is disposed between an input end and an output end of the power transmission system, to form an interference return path, so that interference currents flowing through the input end and the output end can be reduced when an external impedance is small, for example, when a CE test is performed. In addition, a Y capacitor is not required, and a capacitor in the crossover capacitor group has a low withstand voltage and a large capacitance value, which can greatly reduce a volume of a filter inductor, and further reduce costs.

Therefore, the following technical solutions are used in embodiments of this application.

According to a first aspect, an embodiment of this application provides a power transmission system. The power transmission system includes: a power conversion circuit, configured to perform power conversion on an input electrical signal; a filter circuit, including a first filter circuit and/or a second filter circuit, where an input end of the first filter circuit is coupled to an input end of the power transmission system, the first filter circuit is configured to perform, at the input end, filtering processing on an electrical signal generated through power conversion, and an output end of the first filter circuit is coupled to an input end of the power conversion circuit; and an input end of the second filter circuit is coupled to an output end of the power conversion circuit, the second filter circuit is configured to perform filtering processing on the electrical signal output by the power conversion circuit, and an output end of the second filter circuit is coupled to an output end of the power transmission system; and at least one crossover capacitor group, configured to enable an interference signal generated by the power conversion circuit to return from the output end of the power transmission system to the input end of the power transmission system, where when the filter circuit includes only the second filter circuit, the input end of the power conversion circuit is coupled to the input end of the power transmission system, one end of each crossover capacitor group is coupled to the input end of the power transmission system, and the other end of each crossover capacitor group is coupled to the second filter circuit; or when the filter circuit includes the first filter circuit and the second filter circuit, one end of each crossover capacitor group is coupled to the first filter circuit, and the other end of each crossover capacitor group is coupled to the second filter circuit.

In the power transmission system in this embodiment of this application, the one end of the crossover capacitor group is coupled to the input end of the power transmission system, and the other end of the crossover capacitor group is coupled to the output end of the power transmission system, to form a return path, so that the interference signal output by the output end of the power conversion circuit returns to the input end of the power conversion circuit, to reduce an interference current flowing through the input end of the power transmission system and/or an interference current flowing through the output end of the power transmission system. In this way, when an external impedance is excessively small, there is no large common-mode current. For example, when a CE test is performed, interference currents received by LISNs at the input end and the output end are small, and a test result does not exceed a standard and can meet a test requirement. In addition, a safety Y capacitor does not need to be added to a housing, a capacitor in the crossover capacitor group has a low withstand voltage and a large capacitance value, which can greatly reduce a volume of a filter inductor, and further reduce costs.

In a possible implementation, the at least one crossover capacitor group includes a first crossover capacitor group. One end of the first crossover capacitor group is coupled to the input end of the power transmission system, and the other end of the first crossover capacitor group is coupled to the output end of the power transmission system. In other words, in this implementation, the two ends of the first crossover capacitor group may be respectively coupled to the input end and the output end of the input end of the power transmission system, so that the path for the interference signal to return can be formed. If the filter circuit includes the first filter circuit, and the input end of the first filter circuit is coupled to the input end of the power transmission system, the one end of the first crossover capacitor group is coupled to the input end of the first filter circuit. If the filter circuit includes the second filter circuit, and the output end of the second filter circuit is coupled to the output end of the power transmission system, the other end of the first crossover capacitor group is coupled to the output end of the second filter circuit.

In a possible implementation, the first filter circuit includes a first filter capacitor and one or at least two serially-connected first filter inductors, an input end of the one or at least two serially-connected first filter inductors is the input end of the first filter circuit, an output end of the one or at least two serially-connected first filter inductors is the output end of the first filter circuit, the first filter capacitor is disposed at at least one of the input end of the first filter circuit, the output end of the first filter circuit, and a position between at least two adjacent first filter inductors, one end of the first filter capacitor is coupled to a positive electrode of the input end of the power transmission system, and the other end of the first filter capacitor is coupled to a negative electrode of the input end of the power transmission system; and/or the second filter circuit includes a second filter capacitor and one or at least two serially-connected second filter inductors, an input end of the one or at least two serially-connected second filter inductors is the input end of the second filter circuit, an output end of the one or at least two serially-connected second filter inductors is the output end of the second filter circuit, the second filter capacitor is disposed at at least one of the input end of the second filter circuit, the output end of the second filter circuit, and a position between at least two adjacent second filter inductors, one end of the second filter capacitor is coupled to a positive electrode of the output end of the power transmission system, and the other end of the second filter capacitor is coupled to a negative electrode of the output end of the power transmission system. In other words, in this implementation, the first filter circuit may include at least one first filter inductor and at least one first filter capacitor, and the second filter circuit may include at least one second filter inductor and at least one second filter capacitor.

In a possible implementation, the filter circuit includes the first filter circuit and the second filter circuit, the first filter inductor includes a first common-mode inductor or includes a first differential-mode inductor and a second differential-mode inductor, and the second filter inductor includes a second common-mode inductor or includes a third differential-mode inductor and/or a fourth differential-mode inductor; or the first filter inductor includes a first differential-mode inductor or a second differential-mode inductor, and the second filter inductor includes a second common-mode inductor or includes a third differential-mode inductor and a fourth differential-mode inductor. Alternatively, the filter circuit includes only the second filter circuit, and the second filter inductor includes a second common-mode inductor or includes a third differential-mode inductor and a fourth differential-mode inductor. A first input end of the first common-mode inductor is coupled to the positive electrode of the input end of the power transmission system, and a first output end of the first common-mode inductor is coupled to a positive electrode of the input end of the power conversion circuit. A second input end of the first common-mode inductor is coupled to the negative electrode of the input end of the power transmission system, and a second output end of the first common-mode inductor is coupled to a negative electrode of the input end of the power conversion circuit. One end of the first differential-mode inductor is coupled to the positive electrode of the input end of the power transmission system, and the other end of the first differential-mode inductor is coupled to the positive electrode of the input end of the power conversion circuit. One end of the second differential-mode inductor is coupled to the negative electrode of the input end of the power transmission system, and the other end of the second differential-mode inductor is coupled to the negative electrode of the input end of the power conversion circuit. A first input end of the second common-mode inductor is coupled to a positive electrode of the output end of the power conversion circuit, and a first output end of the second common-mode inductor is coupled to the positive electrode of the output end of the power transmission system. A second input end of the second common-mode inductor is coupled to a negative electrode of the output end of the power conversion circuit, and a second output end of the second common-mode inductor is coupled to the negative electrode of the output end of the power transmission system. One end of the third differential-mode inductor is coupled to the positive electrode of the output end of the power conversion circuit, and the other end of the third differential-mode inductor is coupled to the positive electrode of the output end of the power transmission system. One end of the fourth differential-mode inductor is coupled to the negative electrode of the output end of the power conversion circuit, and the other end of the fourth differential-mode inductor is coupled to the negative electrode of the output end of the power transmission system. In other words, in this implementation, the first filter inductor may include a common-mode inductor or at least one differential-mode inductor, and the second filter inductor may include a common-mode inductor or at least one differential-mode inductor. In addition, it usually needs to be ensured that at least one inductor is connected in series to each of a positive electrode wire and a negative electrode wire of the interference return path. In addition, if necessary, the first filter inductor may include both the common-mode inductor and the differential-mode inductor, and the second filter circuit may also include both the common-mode inductor and the differential-mode inductor.

In a possible implementation, the at least one crossover capacitor group includes a second crossover capacitor group. One end of the second crossover capacitor group is coupled to a first node between two adjacent first filter inductors of the filter circuit, and the other end of the second crossover capacitor group is coupled to the output end of the power transmission system or the output end of the power conversion circuit. In other words, in this implementation, the filter circuit includes the first filter circuit, the first filter circuit includes the two adjacent first filter inductors, and the one end of the second crossover capacitor group is coupled to the first node between the two adjacent first filter inductors. If the filter circuit includes the second filter circuit, when the other end of the second crossover capacitor group is coupled to the output end of the power transmission system, the other end of the second crossover capacitor group is also coupled to the output end of the second filter circuit; or when the other end of the second crossover capacitor group is coupled to the output end of the power conversion circuit, the other end of the second crossover capacitor group is also coupled to the input end of the second filter circuit. If the filter circuit does not include the second filter circuit, when the other end of the second crossover capacitor group is coupled to the output end of the power transmission system, the other end of the second crossover capacitor group is also coupled to the output end of the power conversion circuit (because when the filter circuit does not include the second filter circuit, the output end of the power conversion circuit is coupled to the output end of the power transmission system), so that the path for the interference signal to return can be formed.

In a possible implementation, the at least one crossover capacitor group includes a third crossover capacitor group. One end of the third crossover capacitor group is coupled to the input end of the power transmission system or the input end of the power conversion circuit, and the other end of the third crossover capacitor group is coupled to a second node between two adjacent second filter inductors of the filter circuit. In other words, in this implementation, the filter circuit includes the second filter circuit, the second filter circuit includes the two adjacent second filter inductors, and the other end of the third crossover capacitor group is coupled to the second node between the two adjacent second filter inductors. If the filter circuit includes the first filter circuit, when the one end of the third crossover capacitor group is coupled to the input end of the power transmission system, the one end of the third crossover capacitor group is also coupled to the input end of the first filter circuit; or when the one end of the third crossover capacitor group is coupled to the input end of the power conversion circuit, the one end of the third crossover capacitor group is also coupled to the output end of the first filter circuit. If the filter circuit does not include the first filter circuit, when the other end of the second crossover capacitor group is coupled to the input end of the power transmission system, the other end of the second crossover capacitor group is also coupled to the input end of the power conversion circuit (because the filter circuit does not include the first filter circuit, the input end of the power conversion circuit is coupled to the input end of the power transmission system), so that the path for the interference signal to return can be formed.

In a possible implementation, the at least one crossover capacitor group includes a fourth crossover capacitor group. One end of the fourth crossover capacitor group is coupled to a first node between two adjacent first filter inductors of the filter circuit, and the other end of the fourth crossover capacitor group is coupled to a second node between two adjacent second filter inductors of the filter circuit. In other words, in this implementation, the filter circuit includes the first filter circuit and the second filter circuit, the first filter circuit includes the two adjacent first filter inductors, and the second filter circuit includes the two adjacent second filter inductors. The two ends of the fourth crossover capacitor group are respectively coupled to the first node between the two adjacent first filter inductors and the second node between the two adjacent second filter inductors, so that the path for the interference signal to return can be formed.

In a possible implementation, the at least one crossover capacitor group includes a fifth crossover capacitor group, one end of the fifth crossover capacitor group is coupled to the input end of the first filter circuit, and the other end of the fifth crossover capacitor group is coupled to the output end of the power conversion circuit; and/or the at least one crossover capacitor group includes a sixth crossover capacitor group, one end of the sixth crossover capacitor group is coupled to the input end of the power conversion circuit, and the other end of the sixth crossover capacitor group is coupled to the output end of the second filter circuit. In other words, in this implementation, when the at least one crossover capacitor group includes the fifth crossover capacitor group, the filter circuit may include only the first filter circuit, or may include both the first filter circuit and the second filter circuit. When the at least one crossover capacitor group includes the sixth crossover capacitor group, the filter circuit may include only the second filter circuit, or may include both the first filter circuit and the second filter circuit.

In a possible implementation, the at least one crossover capacitor group includes a seventh crossover capacitor group. One end of the seventh crossover capacitor group is coupled to the input end of the power conversion circuit, and the other end of the seventh crossover capacitor group is coupled to the output end of the power conversion circuit. In other words, in this implementation, the filter circuit may include the first filter circuit and/or the second filter circuit, and the two ends of the seventh crossover capacitor group are respectively coupled to the input end and the output end of the power conversion circuit, so that the path for the interference signal to return can be formed.

In a possible implementation, the crossover capacitor group includes: a first capacitor group, where one end of the first capacitor group is coupled to one of the positive electrode of the input end of the power transmission system and the negative electrode of the input end of the power transmission system, and the other end of the first capacitor group is coupled to one of the positive electrode of the output end of the power transmission system and the negative electrode of the output end of the power transmission system; and/or a second capacitor group, where one end of the second capacitor group is coupled to the other one of the positive electrode of the input end of the power transmission system and the negative electrode of the input end of the power transmission system, and the other end of the second capacitor group is coupled to the other one of the positive electrode of the output end of the power transmission system and the negative electrode of the output end of the power transmission system. The first capacitor group and the second capacitor group each include one capacitor or at least two capacitors, and the at least two capacitors are connected in series or in parallel. In other words, in this implementation, the crossover capacitor group may include the first capacitor group and the second capacitor group, or include only the first capacitor group, or include only the second capacitor group. Quantities of capacitor groups included in different crossover capacitor groups may be different or the same. For example, one of two crossover capacitor groups may include the first capacitor group and the second capacitor group, or include only the first capacitor group, or include only the second capacitor group, and the other one of the two crossover capacitor groups may also include the first capacitor group and the second capacitor group, or include only the first capacitor group, or include only the second capacitor group. In addition, a first connection manner of two ends of the crossover capacitor group is as follows: First ends of the two capacitor groups of the crossover capacitor group may be respectively coupled to the positive electrode and the negative electrode of the input end of the power transmission system, and second ends of the two capacitor groups of the crossover capacitor group may be respectively coupled to the positive electrode and the negative electrode of the output end of the power transmission system.

In a possible implementation, the crossover capacitor group includes a third capacitor group and a fourth capacitor group. The third capacitor group includes a first capacitor and a second capacitor that are connected in series between the positive electrode of the input end of the power transmission system and the negative electrode of the input end of the power transmission system. The fourth capacitor group includes a third capacitor and a fourth capacitor that are connected in series between the positive electrode of the output end of the power transmission system and the negative electrode of the output end of the power transmission system. An intermediate node between the first capacitor and the second capacitor is coupled to an intermediate node between the third capacitor and the fourth capacitor. In other words, in this implementation, a second connection manner of the two ends of the crossover capacitor group is as follows: The intermediate node between the two series capacitors, to be specific, the first capacitor and the second capacitor, located between the positive electrode and the negative electrode of the input end of the power transmission system is coupled to the intermediate node between the two series capacitors, to be specific, the third capacitor and the fourth capacitor, located between the positive electrode and the negative electrode of the output end of the power transmission system. In other words, one end of the crossover capacitor group may be coupled to the input end of the power transmission system by using the first capacitor and the second capacitor, and the other end of the crossover capacitor group may be coupled to the output end of the power transmission system by using the third capacitor and the fourth capacitor.

In a possible implementation, an electrical signal received by the input end of the power transmission system is a direct current signal, and the power conversion circuit is configured to convert the direct current signal into another direct current signal or into an alternating current signal; or an electrical signal received by the input end of the power transmission system is an alternating current signal, and the power conversion circuit is configured to convert the alternating current signal into a direct current signal. In other words, in this implementation, the power conversion circuit may have three conversion modes: a mode 1: converting the direct current signal into the another direct current signal, for example, a direct current signal with maximum output power; a mode 2: converting the direct current signal into the alternating current signal; and a mode 3: converting the alternating current signal into the direct current signal.

Based on the first aspect and the implementations of the first aspect, according to a second aspect, an embodiment of this application provides a power generation system. The power generation system includes: a power supply device, configured to provide an electrical signal, where the electrical signal is a direct current signal or an alternating current signal; and the power transmission system provided in the first aspect, where the input end of the power transmission system is capable of receiving the electrical signal output by the power supply device.

In a possible implementation, the power supply device is a photovoltaic panel. The photovoltaic panel is configured to convert received sunlight into electric energy to provide a direct current signal. The power conversion circuit includes: a power optimizer, where the power optimizer is configured to perform power optimization, to convert the direct current signal provided by the photovoltaic panel into a direct current signal that outputs maximum power.

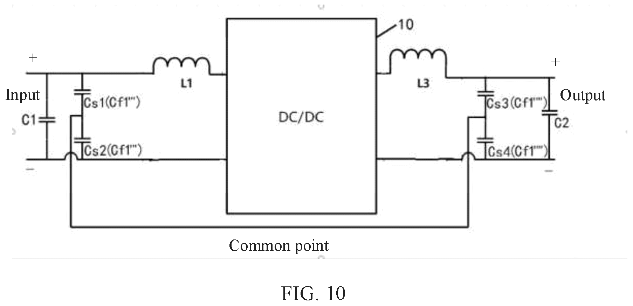

Based on the foregoing aspects and various implementations, according to a third aspect, this application provides a power transmission system, including: a power conversion circuit, configured to perform power conversion on an input electrical signal; a filter circuit, including a first filter circuit and a second filter circuit; and at least one crossover capacitor group. The filter circuit includes the first filter circuit and the second filter circuit. An input end of the first filter circuit is coupled to an input end of the power transmission system, an output end of the first filter circuit is coupled to an input end of the power conversion circuit, and the first filter circuit is configured to perform, at the input end of the power transmission system, filtering processing on an electrical signal generated by the power conversion circuit by performing power conversion. An input end of the second filter circuit is coupled to an output end of the power conversion circuit, an output end of the second filter circuit is coupled to an output end of the power transmission system, and the second filter circuit is configured to perform, at the output end of the power transmission system, filtering processing on the electrical signal generated by the power conversion circuit by performing power conversion. One end of each crossover capacitor group is coupled to the first filter circuit, and the other end of each crossover capacitor group is coupled to the second filter circuit. The first filter circuit includes a first filter inductor, the second filter circuit includes a second filter inductor, the first filter inductor is a first differential-mode inductor (for example, L1 in FIG. 10), and the second filter inductor is a second differential-mode inductor (for example, L3 in FIG. 10). A return path may be formed through the crossover capacitor group disposed in the foregoing manner, so that an interference signal output by the output end of the power conversion circuit returns to the input end of the power conversion circuit, to reduce an interference current flowing through the input end of the power transmission system and/or an interference current flowing through the output end of the power transmission system. In this way, when an external impedance is excessively small, there is no large common-mode current. For example, when a CE test is performed, interference currents received by LISNs at the input end and the output end are small, and a test result does not exceed a standard and can meet a test requirement. In addition, a safety Y capacitor does not need to be added to a housing, a capacitor in the crossover capacitor group has a low withstand voltage and a large capacitance value, which can greatly reduce a volume of a filter inductor, and further reduce costs. In addition, because the second filter inductor is a differential-mode inductor, a requirement for filtering performance can be met, and costs can be reduced.

In an implementation of the third aspect, each crossover capacitor group is not grounded. Because the crossover capacitor group is not grounded, leakage currents can be reduced and product safety can be improved. In addition, this is different from a case in which the crossover capacitor group is grounded in that capacitance can be increased, so that better filtering performance can be achieved.

In another implementation, each crossover capacitor group includes a third capacitor group and a fourth capacitor group. The third capacitor group includes a first capacitor and a second capacitor that are connected in series between a positive electrode of the input end of the power transmission system and a negative electrode of the input end of the power transmission system. The fourth capacitor group includes a third capacitor and a fourth capacitor that are connected in series between a positive electrode of the output end of the power transmission system and a negative electrode of the output end of the power transmission system. An intermediate node between the first capacitor and the second capacitor is coupled to an intermediate node between the third capacitor and the fourth capacitor. Coupling of the intermediate nodes can reduce a voltage on the crossover capacitor. In this way, the capacitance value of the capacitor is increased, and filtering effect is optimized. In addition, noise coupling between input and output can be reduced, and EMC performance is better.

In another implementation, the at least one crossover capacitor group includes a first crossover capacitor group, one end of the first crossover capacitor group is coupled to the input end of the power transmission system, and the other end of the first crossover capacitor group is coupled to the output end of the power transmission system. The crossover capacitor group includes: a first capacitor group, where one end of the first capacitor group is coupled to one of a positive electrode of the input end of the power transmission system and a negative electrode of the input end of the power transmission system, and the other end of the first capacitor group is coupled to one of a positive electrode of the output end of the power transmission system and a negative electrode of the output end of the power transmission system; and/or a second capacitor group, where one end of the second capacitor group is coupled to the other one of the positive electrode of the input end of the power transmission system and the negative electrode of the input end of the power transmission system, and the other end of the second capacitor group is coupled to the other one of the positive electrode of the output end of the power transmission system and the negative electrode of the output end of the power transmission system. The first capacitor group and the second capacitor group each include one capacitor or at least two capacitors, and the at least two capacitors are connected in series or in parallel.

In another possible implementation, the first filter circuit includes a first filter capacitor and one or at least two serially-connected first filter inductors, an input end of the one or at least two serially-connected first filter inductors is the input end of the first filter circuit, an output end of the one or at least two serially-connected first filter inductors is the output end of the first filter circuit, the first filter capacitor is disposed at at least one of the input end of the first filter circuit, the output end of the first filter circuit, and a position between at least two adjacent first filter inductors, one end of the first filter capacitor is coupled to the positive electrode of the input end of the power transmission system, and the other end of the first filter capacitor is coupled to the negative electrode of the input end of the power transmission system; and/or the second filter circuit includes a second filter capacitor and one or at least two serially-connected second filter inductors, an input end of the one or at least two serially-connected second filter inductors is the input end of the second filter circuit, an output end of the one or at least two serially-connected second filter inductors is the output end of the second filter circuit, the second filter capacitor is disposed at at least one of the input end of the second filter circuit, the output end of the second filter circuit, and a position between at least two adjacent second filter inductors, one end of the second filter capacitor is coupled to the positive electrode of the output end of the power transmission system, and the other end of the second filter capacitor is coupled to the negative electrode of the output end of the power transmission system.

In another possible implementation, an electrical signal received by the input end of the power transmission system is a direct current signal, and the power conversion circuit is configured to convert the direct current signal into another direct current signal or into an alternating current signal; or an electrical signal received by the input end of the power transmission system is an alternating current signal, and the power conversion circuit is configured to convert the alternating current signal into a direct current signal.

Based on the foregoing aspects and the implementations of the aspects, according to a fourth aspect of this application, a power generation system is provided, including: a power supply device, configured to provide an electrical signal, where the electrical signal is a direct current signal or an alternating current signal; and the power transmission system according to the foregoing aspects and the implementations of the aspects, where the input end of the power transmission system is capable of receiving the electrical signal output by the power supply device.

In an implementation, the power supply device is a photovoltaic panel. The photovoltaic panel is configured to convert received sunlight into electric energy to provide a direct current signal. The power conversion circuit includes: a power optimizer, where the power optimizer is configured to perform power optimization, to convert the direct current signal provided by the photovoltaic panel into a direct current signal that outputs maximum power.

In a possible implementation, the power supply device is an alternating current power grid, the alternating current power grid is configured to provide an alternating current signal, and the power conversion circuit is configured to convert the alternating current signal into a direct current signal.

Other features and advantages of the present invention are described in detail in the following part of specific embodiments.

### BRIEF DESCRIPTION OF DRAWINGS

The following briefly describes accompanying drawings for describing embodiments or a conventional technology.
FIG. 1A is a schematic of a circuit structure of a buck/boost apparatus;
FIG. 1B is a schematic of a circuit structure of an ultra-wideband EMC power filter;
FIG. 2A is a principle schematic of performing a CE test on power conversion equipment of a photovoltaic power generation system in which no filter circuit is disposed;
FIG. 2B is a schematic of a common-mode return path of the power conversion equipment shown in FIG. 2A on which the CE test is performed;
FIG. 3 is a principle schematic of performing a CE test on power conversion equipment of a photovoltaic power generation system in which a filter circuit is disposed;
FIG. 4 is a schematic of a structure of a power transmission system according to a first embodiment of this application;
FIG. 5 is a principle schematic of performing a CE test on the power transmission system shown in FIG. 4;
FIG. 6 is a schematic of a variant structure of the power transmission system shown in FIG. 4;
FIG. 7 is a schematic of another variant structure of the power transmission system shown in FIG. 4;
FIG. 8 is a schematic of a structure of a power transmission system according to a second embodiment of this application;
FIG. 9 is a schematic of a structure of a power transmission system according to a third embodiment of this application; and
FIG. 10 is a schematic of another structure of a power transmission system according to this application.

### DESCRIPTION OF EMBODIMENTS

The following describes technical solutions in embodiments of this application with reference to the accompanying drawings in embodiments of this application. It is clearly that the described embodiments are merely some rather than all of embodiments of this specification.

In the descriptions of this specification, "an embodiment", "some embodiments", or the like indicates that one or more embodiments of this specification include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

In the descriptions of this specification, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions in embodiments of this application, "a plurality of" means two or more.

In the descriptions of this specification, the terms "first" and "second" are merely intended for description, and shall not be understood as an indication or implication of relative importance or an implicit indication of a quantity of indicated technical features. Therefore, a feature limited by "first" or "second" may explicitly or implicitly include one or more features. The terms "include", "comprise", "have" and their variants mean "including but not limited to" unless specifically emphasized otherwise.

It should be noted that "coupling" used in this specification includes a direct connection without any inserted circuit object between two or more circuit objects, and also includes an indirect connection implemented between two or more circuit objects by using one or more inserted circuit objects. For example, two circuit objects that are directly connected to each other are referred to as being "coupled" to each other. Similarly, if one or more inserted circuit objects are connected between two circuit objects, the two circuit objects are also referred to as being "coupled" to each other. In other words, "coupling" may be a direct electrical connection, or may be an indirect electrical connection. The indirect electrical connection means that there is another component in between, such as a resistor or a capacitor.

It may be understood that various numbers in embodiments of this application are merely used for differentiation for ease of description, and are not used to limit the scope of embodiments of this application.

The following describes in detail acronyms and key terms used in embodiments of this application.

A power optimizer is a module-level power electronic device with direct current input and direct current output. Every one or two photovoltaic modules are connected to one power optimizer having a maximum power point tracking function. The optimizer may convert a current based on a requirement of a series circuit, for example, convert a low current into a high current. Finally, output ends of power optimizers are connected in series and connected to a combiner box or an inverter, so that module-level control can be implemented.

A safety capacitor is a capacitor that does not cause electric shocks and endanger personal safety after the safety capacitor fails. The safety capacitor includes two types: an X capacitor and a Y capacitor. The X capacitor is a capacitor bridging two power lines (L-N), and is usually a metal film capacitor. The Y capacitor is a capacitor bridging two power lines and ground (L-E and N-E), and usually appears in pairs. Based on limitation of a leakage current, a capacitance value of the Y capacitor cannot be excessively large. The X capacitor suppresses differential-mode interference, and the Y capacitor suppresses common-mode interference.

A conducted emission (conducted emission, CE) test is usually referred to as a disturbance voltage test, and is related in all products with power cables, including many direct current power supply products. In addition, a signal/control line has a requirement for conducted emission in many standards, which is usually represented by a limit value of a disturbance voltage dBuV or a limit value of a disturbance current dBuA (where the disturbance voltage and the disturbance current have a conversion relationship).

Insertion loss/insertion loss means a loss of energy or gain when some components or branch circuits (such as a filter and an impedance matcher) are added to a circuit.

A line impedance stabilization network is an important auxiliary device in an electromagnetic compatibility test of a power system. The line impedance stabilization network may isolate power grid interference, provide a stable test impedance, and serve a filtering role.

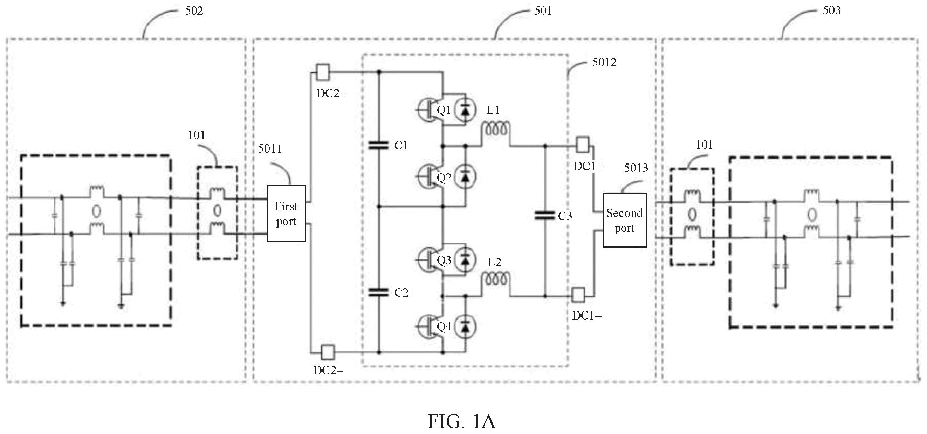

FIG. 1A is a schematic of a circuit structure of a buck/boost apparatus. As shown in FIG. 1A, the buck/boost apparatus includes a buck/boost circuit 501, a first EMC filter circuit 502, and a second EMC filter circuit 503. The buck/boost circuit 501 includes a first port 5011, a buck/boost module 5012, and a second port 5013. The first port 5011 is connected to an input end of an oscillating current suppression module 101 in the first EMC filter circuit 502, and the second port 5013 is connected to an input end of an oscillating current suppression module 101 in the second EMC filter circuit 503. The oscillating current suppression module 101 includes a common-mode inductor.

The common-mode inductor is additionally added to a standard electromagnetic compatibility filter circuit, so that when the EMC filter circuit is connected to the buck/boost circuit, a resonance problem caused by a Y capacitor and a differential-mode inductor is effectively avoided, an EMC characteristic is greatly improved, and a measure is simple and practical.

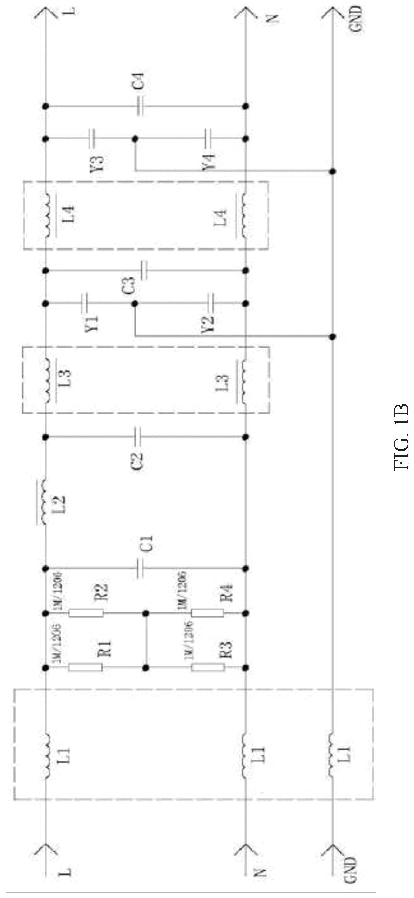

FIG. 1B is a schematic of a circuit structure of an ultra-wideband EMC power filter. As shown in FIG. 1B, the ultra-wideband EMC power filter includes a live wire L, a neutral wire N, and a grounding wire GND. Input ends of the live wire L, the neutral wire N, and the grounding wire GND each are connected to an EMC high-frequency magnetic ring L1. Output ends of EMC high-frequency magnetic rings L1 on the live wire L and the neutral wire N each are sequentially connected in series to a common-mode inductor L3 and a common-mode inductor L4. A low-frequency differential-mode inductor L2 is connected between the output end of the EMC high-frequency magnetic ring L1 on the live wire L and an input end of the common-mode inductor L3. The output end of the EMC high-frequency magnetic ring L1 on the live wire L is connected to a resistor R1 and a resistor R3, and is connected to the output end of the EMC high-frequency magnetic ring L1 on the neutral wire N. Two ends of the resistor R1 and the resistor R3 are connected in parallel to a resistor R2 and a resistor R4. An output end of the resistor R1 is connected to an input end of the resistor R4. Two ends of the resistor R2 and the resistor R4 are connected in parallel to a capacitor C1. An output end of the low-frequency differential-mode inductor L2 is connected to a capacitor C2, and is connected to an input end of a common-mode inductor L3 on the neutral wire N. An output end of a common-mode inductor L3 on the live wire L is connected to a capacitor Y1 and a capacitor Y2, and is connected to an output end of the common-mode inductor L3 on the neutral wire N. Two ends of the capacitor Y1 and the capacitor Y2 are connected in parallel to a capacitor C3. An output end of the capacitor Y1 is connected to an output end of an EMC high-frequency magnetic ring L1 on the grounding wire GND. An output end of a common-mode inductor L4 on the live wire L is connected to a capacitor Y3 and a capacitor Y4, and is connected to an output end of a common-mode inductor L4 on the neutral wire N. Two ends of the capacitor Y3 and the capacitor Y4 are connected in parallel to a capacitor C4. An output end of the capacitor Y3 is connected to the output end of the EMC high-frequency magnetic ring L1 on the grounding wire GND.

The EMC high-frequency magnetic ring L1 is added, so that excessively good EMC filtering effect can be achieved for a frequency greater than 50 MHz. One stage of low-frequency differential-mode inductor L2 made of a low-frequency magnetic core material is added to the live wire L, so that an EMC interference signal in a range of 9 kHz to 150 kHz can be effectively removed. The ultra-wideband EMC power filter has a wider range, and can replace all current filters, so that an available field is expanded, and other EMC components in a product can be effectively reduced.

The foregoing two solutions both use safety Y capacitors, and are applicable only to a grounding device. In addition, in the first solution, filtering effect of a loop formed through coupling between an input end and an output end is poor. In the second solution, wideband and high-impedance filtering effect is implemented in a single-path filtering enhancement manner, which is applicable to a single-port scenario, and has limited applicability. In addition, a plurality of stages of common-mode inductors are required, which is not conducive to reducing a volume and costs.

In view of this, embodiments of this application provide a power transmission system and a power generation system. The power generation system includes a power supply device and a power transmission system. The power supply device is configured to provide an electrical signal. The electrical signal is a direct current signal or an alternating current signal. An input end of the power transmission system is capable of receiving the electrical signal output by the power supply device. At least one crossover capacitor group is disposed between the input end and an output end of the power transmission system to form an interference return path, so that common-mode currents flowing through the input end and the output end of the power transmission system can be reduced. In this way, when an external impedance is excessively small, there is no large common-mode current. For example, when a CE test is performed (that is, both the input end and the output end of the power transmission system are connected to LISNs, and the two LISNs at the input end and the output end of the power transmission system are connected in series), interference currents received by the LISNs at the input end and the output end are small, and CE test results at the input end and the output end do not exceed a standard and can meet a test requirement. In addition, in this filtering solution, a Y capacitor does not need to be added to a housing, and a capacitor in the crossover capacitor group has a low withstand voltage and a large capacitance value, which can greatly reduce a volume of a filter inductor, and further reduce costs.

In other words, the power transmission system in embodiments of this application is applicable to a multi-port non-isolated architecture scenario, for example, an existing power optimizer project, so that a problem of interference return generated when a plurality of power ports are terminated with low a common-mode impedance such as the LISN can be resolved, a problem that a common-mode filtering insertion loss of a product is insufficient because the safety Y capacitor cannot be increased can be resolved, and impact on product efficiency is minimized.

The power supply device may be a photovoltaic panel. The photovoltaic panel is configured to convert received sunlight into electric energy to provide a direct current signal. A power conversion circuit of the power transmission system may include an inverter, and the inverter is configured to invert the direct current signal into an alternating current signal. Alternatively, a power conversion circuit of the power transmission system may include a power optimizer, and the power optimizer is configured to perform power optimization, to convert the direct current signal provided by the photovoltaic panel into a direct current signal that outputs maximum power. In addition, another power supply device may be selected according to a requirement. For example, the power supply device may be an alternating current power grid. The alternating current power grid is configured to provide an alternating current signal, and the power conversion circuit of the power transmission system is configured to convert the alternating current signal into a direct current signal. In embodiments of this application, an example in which the power supply device is a photovoltaic panel and the power conversion circuit is a power optimizer is mainly used for description. In this case, the power conversion circuit may convert the direct current signal provided by the photovoltaic panel into the direct current signal that outputs the maximum power.

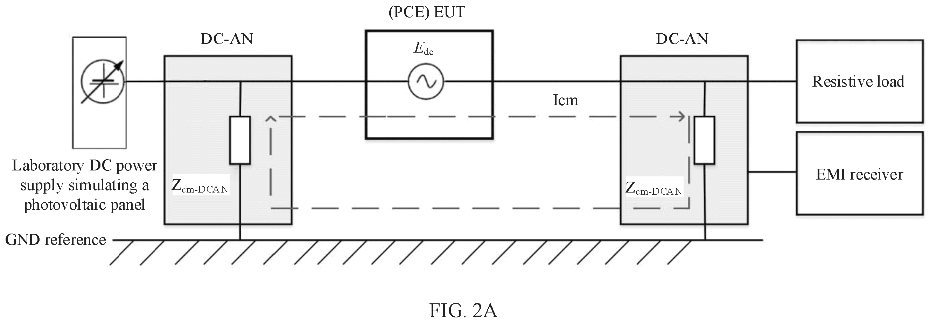

FIG. 2A is a principle schematic of performing a CE test on power conversion equipment of a photovoltaic power generation system in which no filter circuit is disposed. As shown in FIG. 2A, the test system may include a DC power supply simulating a photovoltaic (photovoltaic, PV) panel, equipment under test (equipment under test, EUT), namely, power conversion equipment (power conversion equipment, PCE), a resistive load such as a PV inverter, an EMI (electromagnetic interference, electromagnetic interference) receiver, and the like. The EUT (PCE) may be a power optimizer. During the CE test, an input end and an output end of the EUT (PCE) each are connected to a LISN, namely, a DC-AN. In this case, two LISNs are grounded, so that a LISN at the input end, the (PCE) EUT, and a LISN at the output end form a loop. Input and output impedances are two LISN impedances connected in series. Input and output return through the LISNs to form common-mode currents.

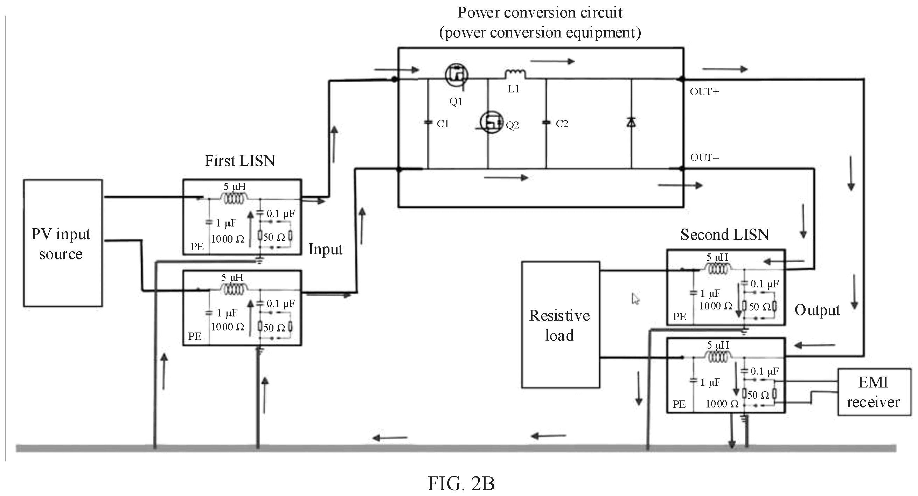

FIG. 2B is a schematic of a common-mode return path of the power conversion equipment shown in FIG. 2A on which the CE test is performed. As shown in FIG. 2B, a power conversion circuit of the power conversion equipment such as a power optimizer may include switching transistors Q1 and Q2, an inductor L1, capacitors C1 and C2, a diode, and the like. An input end of the power conversion circuit is connected to a first LISN, and an output end of the power conversion circuit is connected to a second LISN. A noise mechanism of a non-isolated architecture of the power optimizer is analyzed as follows: When the internal switching transistor Q1 or Q2 of the power optimizer operates, the following current path exists: ① switching noise excitation of the switching transistor in the optimizer → (2) output (output) end of the optimizer → ③ second LISN at the output end → (4) first LISN at the input end → ⑤ switching transistor in the power optimizer. Because an external impedance, namely, the LISN, is excessively small, there is an excessively large common-mode current. When the current exceeds a specific value, an interference signal received by an EMI receiver coupled to the LISN at the output end is strong, and a CE test result such as a disturbance voltage dBuV or a disturbance current dBuA severely exceeds a standard.

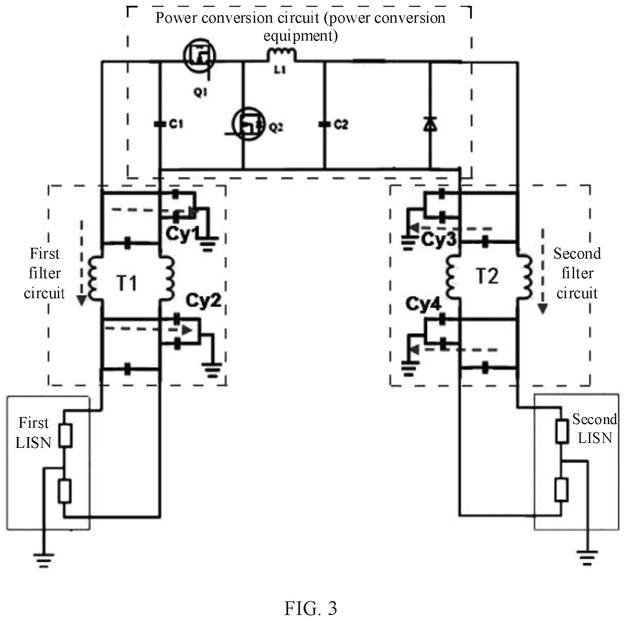

FIG. 3 is a principle schematic of performing a CE test on power conversion equipment of a photovoltaic power generation system in which a filter circuit is disposed. As shown in FIG. 3, the photovoltaic power generation system includes a power transmission system, a first LISN, and a second LISN. The power transmission system includes a power conversion circuit, a first filter circuit, and a second filter circuit. The first LISN is coupled to an input end of the first filter circuit. The second LISN is coupled to an output end of the second filter circuit.

The first filter circuit includes a first common-mode inductor T1 and Y capacitors Cy1 and Cy2, and the second filter circuit includes a second common-mode inductor T2 and Y capacitors Cy3 and Cy4. Input and output of the power conversion circuit each are grounded through the common-mode inductor and the Y capacitor for filtering. After modules are connected in series, a voltage of a downstream optimizer module to ground increases to 200 V to 500 V. According to a safety requirement, the Y capacitor needs to be a safety-certified capacitor rated Y2 or above. In addition, a capacitance value Cy of the Y capacitor is limited, and a pF-level capacitor needs to be selected. To obtain good filtering effect or meet a required common-mode filtering requirement, a common-mode inductor with a large inductance value, for example, from 5 mH to 10 mH, needs to be selected, which results in a large volume and high costs.

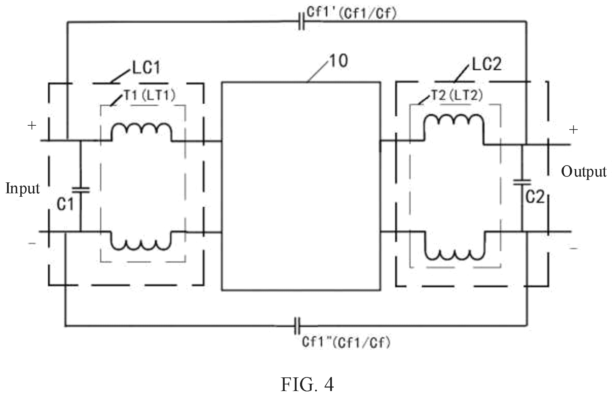

FIG. 4 is a schematic of a structure of a power transmission system according to a first embodiment of this application. As shown in FIG. 4, the power transmission system includes a power conversion circuit 10 and a filter circuit. The filter circuit includes a first filter circuit LC1 and a second filter circuit LC2. An input end of the first filter circuit LC1 is coupled to an input end of the power transmission system. The first filter circuit LC1 is configured to perform filtering processing on an electrical signal received by the input end of the power transmission system. An output end of the first filter circuit LC1 is coupled to an input end of the power conversion circuit 10. The power conversion circuit 10 is configured to perform power conversion on an electrical signal that is output by the output end of the first filter circuit LC1 and that is obtained through filtering processing. An input end of the second filter circuit LC2 is coupled to an output end of the power conversion circuit 10. The second filter circuit LC2 is configured to perform filtering processing on an electrical signal output by the power conversion circuit 10. An output end of the second filter circuit LC2 is coupled to an output end of the power transmission system.

The power conversion circuit 10 may have at least one of functions of boosting, bucking, rectification, inversion, and the like, and may convert power input by the input end of the power conversion circuit 10 into power required by a load coupled to the output end of the power conversion circuit 10. Specifically, a magnitude and a type of a current may be changed. For example, the electrical signal received by the input end of the power transmission system may be a direct current signal. In this case, the power conversion circuit 10 is configured to convert the direct current signal into another direct current signal or into an alternating current signal. For another example, the electrical signal received by the input end of the power transmission system may be an alternating current signal. In this case, the power conversion circuit 10 is configured to convert the alternating current signal into a direct current signal. In other words, the power conversion circuit 10 may have three conversion modes: a mode 1: converting the direct current signal into the another direct current signal, for example, a direct current signal with maximum output power, where the power conversion circuit 10 may be a power optimizer in this case; a mode 2: converting the direct current signal into the alternating current signal, where the power conversion circuit 10 may be an inverter in this case; and a mode 3: converting the alternating current signal into the direct current signal. It may be understood that, if necessary, the power conversion circuit may alternatively have another conversion mode.

Further, the power transmission system may further include at least one crossover capacitor group Cf. One end of each crossover capacitor group Cf is coupled to the first filter circuit LC1, and the other end of each crossover capacitor group Cf is coupled to the second filter circuit LC2. The at least one crossover capacitor group Cf is configured to enable an interference signal in the electrical signal output by the output end of the power conversion circuit 10 to return to the input end of the power conversion circuit 10. The interference signal is usually an alternating current signal. When a target signal in the electrical signal is a direct current signal, the direct current signal cannot pass through the crossover capacitor group Cf, but the alternating current signal may pass through the crossover capacitor group Cf. Therefore, the interference signal in the electrical signal can return. When the target signal in the electrical signal is an alternating current signal, because a frequency of the target signal is different from a frequency of the interference signal, an inductance value of a filter inductor, a capacitance value of a filter capacitor, and a capacitance value of the crossover capacitor group Cf in the filter circuit are properly set, so that only the interference signal returns through the crossover capacitor group Cf, and the target signal does not pass through the crossover capacitor group Cf.

In the power transmission system in this embodiment of this application, the one end of the crossover capacitor group is coupled to the input end of the power transmission system, and the other end of the crossover capacitor group is coupled to the output end of the power transmission system. For example, the one end of the crossover capacitor group Cf is coupled to the first filter circuit LC1, and the other end of the crossover capacitor group Cf is coupled to the second filter circuit LC2, to form a path for the interference signal to return, so that the interference signal in the electrical signal output by the output end of the power conversion circuit 10 returns to the input end of the power conversion circuit 10, to reduce an interference current flowing through the input end of the power transmission system and/or an interference current flowing through the output end of the power transmission system. In this way, when an external impedance is excessively small, there is no large common-mode current. For example, when a CE test is performed, interference currents received by LISNs coupled to the input end and the output end of the power conversion circuit 10 are small, and a test result does not exceed a standard and can meet a test requirement. In addition, a safety Y capacitor does not need to be added to a housing, a capacitor in the crossover capacitor group Cf has a low withstand voltage and a large capacitance value, which can greatly reduce a volume and costs of the inductor.

In FIG. 4, the at least one crossover capacitor group Cf includes a first crossover capacitor group Cf1, and the first crossover capacitor group Cf1 may include at least one of a first capacitor group Cf1' and a second capacitor group Cf1". One end of the first crossover capacitor group Cf1 (namely, the capacitor group Cf1' and/or the capacitor group Cf1") is coupled to the input end of the first filter circuit LC1, and the other end of the first crossover capacitor group Cf1 (namely, the capacitor group Cf1' and/or the capacitor group Cf1") is coupled to the output end of the second filter circuit LC2. The two ends of the first crossover capacitor group Cf1 may be respectively located on outer sides of the first filter circuit LC1 and the second filter circuit LC2. In other words, the two ends of the first crossover capacitor group Cf1 may be respectively coupled to the input end and the output end of the power transmission system. In this case, the filter circuit may alternatively include only the first filter circuit LC1, or include only the second filter circuit LC2.

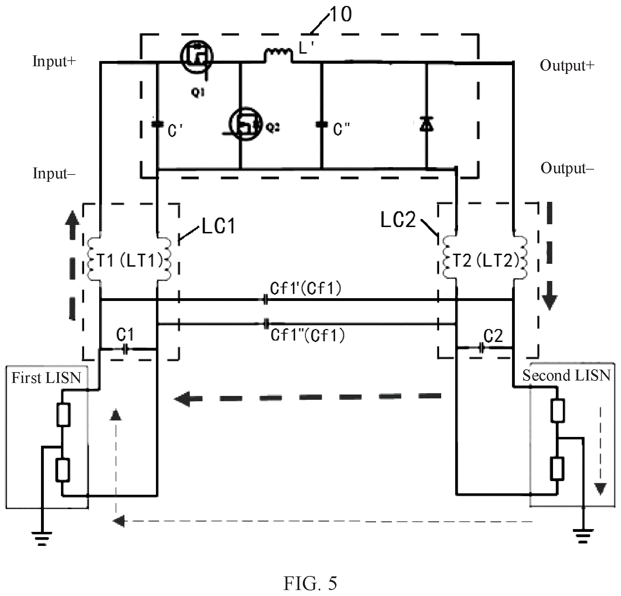

FIG. 5 is a principle schematic of performing a CE test on the power transmission system shown in FIG. 4. As shown in FIG. 5, the power conversion circuit 10 may be a power optimizer, and may include switching transistors Q1 and Q2, an inductor L', capacitors C' and C", a diode, and the like. The first filter circuit LC1 is disposed at the input end of the power conversion circuit 10, the second filter circuit LC2 is disposed at the output end of the power conversion circuit 10, and the crossover capacitor group such as the first crossover capacitor group Cf1 is coupled to the first filter circuit LC1 and the second filter circuit LC2, so that the interference current has the following two paths.

Main path (with reference to a thick dashed arrow in FIG. 5): ① switching noise excitation (interference signal) of the switching transistor of the power conversion circuit 10 → (2) output end of the power conversion circuit 10 → ③ second filter circuit LC2 → (4) first crossover capacitor group Cf1 (which may include the first capacitor group Cf1' and the second capacitor group Cf1") → ⑤ first filter circuit LC1 → ⑥ switching transistor of the power conversion circuit 10.

Secondary path (with reference to a thin dashed arrow in FIG. 5): ① switching noise excitation of the switching transistor → ② output end of the optimizer → ③ second filter circuit LC2 → (4) second LISN at the output end → ⑤ first LISN at the input end → ⑥ first filter circuit LC1 → ⑦ switching transistor of the power conversion circuit 10.

In other words, in the solution in this embodiment of this application, when filtering is performed, the common-mode interference current may return internally, to prevent most noise from flowing through the LISN. In this way, on a premise that technical efficiency of a product is not affected, the inductance value of the filter inductor can be greatly reduced, so that a volume of a port filter circuit (an inductor or a capacitor) of a dual-port or multi-port device can be effectively reduced, which is conducive to reducing costs. In addition, common-mode filtering can be implemented without grounding a product housing. The interference current returns internally. A capacitance value of a filter crossover capacitor is not limited by a safety requirement and can be adjusted in a large range.

In an example, on a premise that the CE test is satisfied, compared with a conventional filtering solution, the solution in this embodiment of this application can reduce a volume of the filter circuit by at least 30%, reduce costs by 50%, and avoid generation of a leakage current. In actual installation, it is not required that the entire product is grounded, to avoid a high withstand voltage requirement of a component due to grounding.

In addition, there may be a plurality of selections for a position of the crossover capacitor group, and flexibility is high. Specifically, a position of a crossover capacitor group other than the first crossover capacitor group Cf1 may be completely different from positions of the two ends of the first crossover capacitor group Cf1. Alternatively, another crossover capacitor group may be obtained by adjusting a position of one end of the first crossover capacitor group Cf1. For example, the at least one crossover capacitor group Cf may include a fifth crossover capacitor group (not shown in the figure). One end of the fifth crossover capacitor group is coupled to the input end of the first filter circuit LC1, and the other end of the fifth crossover capacitor group is coupled to the output end of the power conversion circuit. If the filter circuit includes the second filter circuit LC2, the other end of the fifth crossover capacitor group is coupled to the input end of the second filter circuit LC2 (because the input end of the second filter circuit LC2 is coupled to the output end of the power conversion circuit). For another example, the at least one crossover capacitor group Cf may include a sixth crossover capacitor group (not shown in the figure). One end of the sixth crossover capacitor group is coupled to the input end of the power conversion circuit, and the other end of the sixth crossover capacitor group is coupled to the output end of the second filter circuit LC2. If the filter circuit includes the first filter circuit LC1, the one end of the sixth crossover capacitor group is coupled to the output end of the first filter circuit LC1 (because the output end of the first filter circuit LC1 is coupled to the input end of the power conversion circuit).

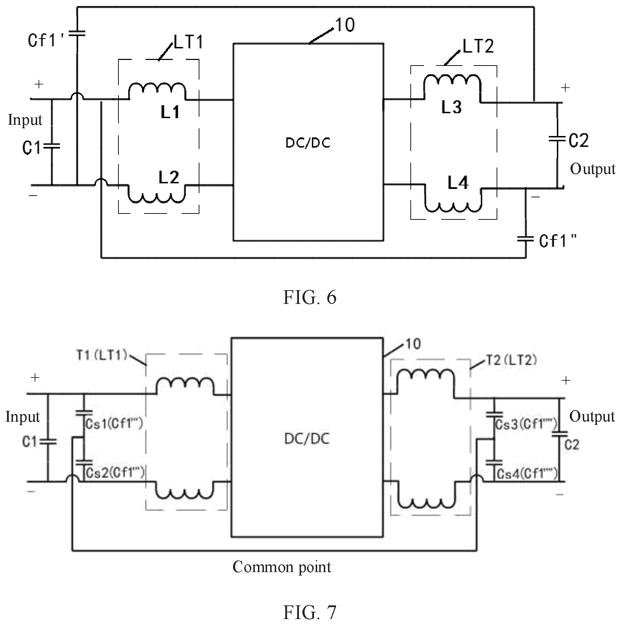

In addition, there may be a plurality of selections for a specific connection manner of the two ends of the crossover capacitor group Cf. FIG. 6 is a schematic of a variant structure of the power transmission system shown in FIG. 4. FIG. 7 is a schematic of another variant structure of the power transmission system shown in FIG. 4. Refer to FIG. 4, FIG. 6, and FIG. 7. The following mainly uses the first crossover capacitor group Cf1 as an example to describe the specific connection manner of the two ends of the crossover capacitor group Cf.

### 1. First connection manner.

As shown in FIG. 4 and FIG. 6, the crossover capacitor group Cf, for example, the first crossover capacitor group Cf1, may include the first capacitor group such as Cf1' and/or the second capacitor group such as Cf1''. The first capacitor group Cf1' and the second capacitor group Cf1'' each include one capacitor or at least two capacitors, and the at least two capacitors may be connected in series or in parallel. In FIG. 4 and FIG. 6, each capacitor group includes one capacitor. One end of the first capacitor group Cf1' is coupled to one of a positive electrode of the input end of the power transmission system and a negative electrode of the input end of the power transmission system, and the other end of the first capacitor group Cf1' is coupled to one of a positive electrode of the output end of the power transmission system and a negative electrode of the output end of the power transmission system. One end of the second capacitor group Cf1'' is coupled to the other one of the positive electrode of the input end of the power transmission system and the negative electrode of the input end of the power transmission system, and the other end of the second capacitor group Cf1'' is coupled to the other one of the positive electrode of the output end of the power transmission system and the negative electrode of the output end of the power transmission system. Specifically, the following four cases may be included.

In a first case, as shown in FIG. 4, the one end of the first capacitor group Cf1' is coupled to the positive electrode of the input end, and the other end of the first capacitor group Cf1' is coupled to the positive electrode of the output end. The one end of the second capacitor group Cf1'' is coupled to the negative electrode of the input end, and the other end of the second capacitor group Cf1'' is coupled to the negative electrode of the output end.

In a second case, the one end of the first capacitor group Cf1' is coupled to the negative electrode of the input end, and the other end of the first capacitor group Cf1' is coupled to the negative electrode of the output end. The one end of the second capacitor group Cf1'' is coupled to the positive electrode of the input end, and the other end of the second capacitor group Cf1'' is coupled to the positive electrode of the output end.

In a third case, the one end of the first capacitor group Cf1' is coupled to the positive electrode of the input end, and the other end of the first capacitor group Cf1' is coupled to the negative electrode of the output end. The one end of the second capacitor group Cf1'' is coupled to the negative electrode of the input end, and the other end of the second capacitor group Cf1'' is coupled to the positive electrode of the output end.

In a fourth case, as shown in FIG. 6, the one end of the first capacitor group Cf1' is coupled to the negative electrode of the input end, and the other end of the first capacitor group Cf1' is coupled to the positive electrode of the output end. The one end of the second capacitor group Cf1'' is coupled to the positive electrode of the input end, and the other end of the second capacitor group Cf1'' is coupled to the negative electrode of the output end.

### 2. Second connection manner.

As shown in FIG. 7, the crossover capacitor group Cf, for example, the first crossover capacitor group Cf1, may include a third capacitor group Cf1‴ and a fourth capacitor group Cf1ʺʺ. The third capacitor group Cf1‴ includes a first capacitor Cs1 and a second capacitor Cs2 that are connected in series between the positive electrode of the input end of the power transmission system and the negative electrode of the input end of the power transmission system. The fourth capacitor group Cf1ʺʺ includes a third capacitor Cs3 and a fourth capacitor Cs4 that are connected in series between the positive electrode of the output end of the power transmission system and the negative electrode of the output end of the power transmission system. An intermediate node between the first capacitor Cs1 and the second capacitor Cs2 is coupled to an intermediate node between the third capacitor Cs3 and the fourth capacitor Cs4.

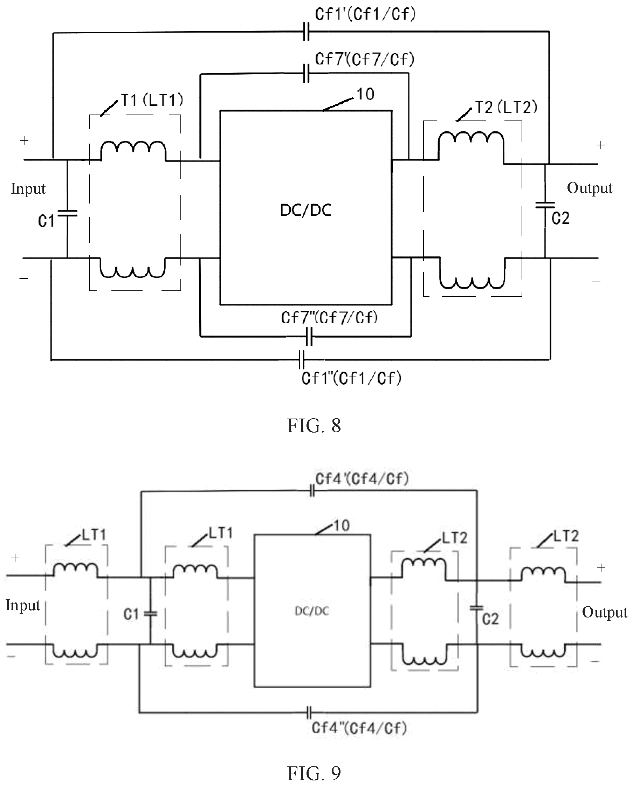

FIG. 8 is a schematic of a structure of a power transmission system according to a second embodiment of this application. Different from the power transmission system of the first embodiment shown in FIG. 4, in FIG. 8, the at least one crossover capacitor group Cf may further include a seventh crossover capacitor group Cf7, where a first capacitor group of the seventh crossover capacitor group Cf7 is Cf7', and a second capacitor group of the seventh crossover capacitor group Cf7 is Cf7". One end of the seventh crossover capacitor group Cf7 (which may include at least one of Cf7' and Cf7") is coupled to the input end of the power conversion circuit, and the other end of the seventh crossover capacitor group Cf7 is coupled to the output end of the power conversion circuit. When the filter circuit includes the first filter circuit LC1, the one end of the seventh crossover capacitor group Cf7 is coupled to the output end of the first filter circuit LC1. When the filter circuit includes the second filter circuit LC2, the other end of the seventh crossover capacitor group Cf7 is coupled to the input end of the second filter circuit LC2.

In other words, in FIG. 8, the power transmission system includes two crossover capacitor groups Cf, to be specific, the first crossover capacitor group Cf1 and the seventh crossover capacitor group Cf7. It may be understood that, if necessary, the power transmission system may include more crossover capacitor groups Cf. In addition, for a specific connection manner of the two ends of the seventh crossover capacitor group Cf7, refer to the two manners described in the foregoing first crossover capacitor group Cf1.

In addition, in the power transmission system in the foregoing embodiment, the first filter circuit LC1 may include a first filter capacitor C1 and one or at least two serially-connected first filter inductors LT1. An input end of the one or at least two serially-connected first filter inductors LT1 is the input end of the first filter circuit LC1, and an output end of the one or at least two serially-connected first filter inductors LT1 is the output end of the first filter circuit LC1. The first filter capacitor C1 is disposed at at least one of the input end of the first filter circuit LC1, the output end of the first filter circuit LC1, and a position between at least two adjacent first filter inductors LT1. In other words, the first filter capacitor C1 may be disposed at at least one of three positions, and the three positions are the input end of the first filter circuit LC1, the output end of the first filter circuit LC1, and the position between the at least two adjacent first filter inductors LT1. In addition, one end of the first filter capacitor C1 is coupled to the positive electrode of the input end of the power transmission system, and the other end of the first filter capacitor C1 is coupled to the negative electrode of the input end of the power transmission system. For example, in FIG. 4 and FIG. 6, the first filter circuit LC1 includes one first filter capacitor C1 and one first filter inductor LT1, and the first filter capacitor C1 is located at the input end of the first filter circuit LC1. In FIG. 9 described below, the first filter circuit LC1 includes one first filter capacitor C1 and two first filter inductors LT1, and the first filter capacitor C1 is located between the two adjacent first filter inductors LT1.

The second filter circuit LC2 may include a second filter capacitor C2 and one or at least two serially-connected second filter inductors LT2. An input end of the one or at least two serially-connected second filter inductors LT2 is the input end of the second filter circuit LC2, and an output end of the one or at least two serially-connected second filter inductors LT2 is the output end of the second filter circuit LC2. The second filter capacitor C2 is disposed at at least one of the input end of the second filter circuit LC2, the output end of the second filter circuit LC2, and a position between at least two adjacent second filter inductors LT2. In other words, the second filter capacitor C2 may be disposed at at least one of three positions, and the three positions are the input end of the second filter circuit LC2, the output end of the second filter circuit LC2, and the position between the at least two adjacent second filter inductors LT2. In addition, one end of the second filter capacitor C2 is coupled to the positive electrode of the output end of the power transmission system, and the other end of the second filter capacitor C2 is coupled to the negative electrode of the output end of the power transmission system. For example, in FIG. 4 and FIG. 6, the second filter circuit LC2 includes one second filter capacitor C2 and one second filter inductor LT2, and the second filter capacitor C2 is located at the output end of the second filter circuit LC2. In FIG. 9 described below, the second filter circuit LC2 includes one second filter capacitor C2 and two second filter inductors LT2, and the second filter capacitor C2 is located between the two adjacent second filter inductors LT2.

The filter circuit includes the first filter circuit LC1 and the second filter circuit LC2, and the first filter inductor LT1 and the second filter inductor LT2 may have but are not limited to the following two cases.

In a first case, the first filter inductor LT1 includes a first common-mode inductor T1 or includes a first differential-mode inductor L1 and a second differential-mode inductor L2, and the second filter inductor LT2 includes a second common-mode inductor T2 or includes a third differential-mode inductor L3 and/or a fourth differential-mode inductor L4. For example, in FIG. 4, the first filter inductor LT1 includes the first common-mode inductor T1, and the second filter inductor LT2 includes the second common-mode inductor T2. In FIG. 6, the first filter inductor LT1 includes the first differential-mode inductor L1 and the second differential-mode inductor L2, and the second filter inductor LT2 includes the third differential-mode inductor L3 and the fourth differential-mode inductor L4.

In a second case, the first filter inductor LT1 includes a first differential-mode inductor L1 or a second differential-mode inductor L2, and the second filter inductor LT2 includes a second common-mode inductor T2 or includes a third differential-mode inductor L3 and/or a fourth differential-mode inductor L4. For example, the first differential-mode inductor L1 or the second differential-mode inductor L2 in FIG. 6 may be removed. In this case, the second filter inductor LT2 includes the third differential-mode inductor L3 and the fourth differential-mode inductor L4. Alternatively, the third differential-mode inductor L3 and the fourth differential-mode inductor L4 may be replaced with the second common-mode inductor T2. Alternatively, only the first differential-mode inductor L1 of the first filter current and the third differential-mode inductor L3 of the second filter circuit are retained, and a bridging manner is that the first differential-mode inductor L1 and the third differential-mode inductor L3 are directly connected through a common point, to obtain a connection manner shown in FIG. 10. Only one differential-mode inductor L1 may be disposed in the first filter circuit, and only one differential-mode inductor L3 may be disposed in the second filter circuit. In this way, filtering performance can be met, and costs can be reduced.

As shown in FIG. 4, a first input end of the first common-mode inductor T1 is coupled to the positive electrode of the input end of the power transmission system, and a first output end of the first common-mode inductor T1 is coupled to a positive electrode of the input end of the power conversion circuit 10. A second input end of the first common-mode inductor T1 is coupled to the negative electrode of the input end of the power transmission system, and a second output end of the first common-mode inductor T1 is coupled to a negative electrode of the input end of the power conversion circuit 10. A first input end of the second common-mode inductor T2 is coupled to a positive electrode of the output end of the power conversion circuit 10, and a first output end of the second common-mode inductor T2 is coupled to the positive electrode of the output end of the power transmission system. A second input end of the second common-mode inductor T2 is coupled to a negative electrode of the output end of the power conversion circuit 10, and a second output end of the second common-mode inductor T2 is coupled to the negative electrode of the output end of the power transmission system.

As shown in FIG. 6, one end of the first differential-mode inductor L1 is coupled to the positive electrode of the input end of the power transmission system, and the other end of the first differential-mode inductor L1 is coupled to the positive electrode of the input end of the power conversion circuit 10. One end of the second differential-mode inductor L2 is coupled to the negative electrode of the input end of the power transmission system, and the other end of the second differential-mode inductor L2 is coupled to the negative electrode of the input end of the power conversion circuit 10. One end of the third differential-mode inductor L3 is coupled to the positive electrode of the output end of the power conversion circuit 10, and the other end of the third differential-mode inductor L3 is coupled to the positive electrode of the output end of the power transmission system. One end of the fourth differential-mode inductor L4 is coupled to the negative electrode of the output end of the power conversion circuit 10, and the other end of the fourth differential-mode inductor L4 is coupled to the negative electrode of the output end of the power transmission system.

In other words, filter inductors at both the input end and the output end of the power conversion circuit may be common-mode inductors, or may be differential-mode inductors. Optionally, the filter inductor at the output end of the power conversion circuit is a common-mode inductor, and the filter inductor at the input end is a differential-mode inductor. Alternatively, the filter inductor at the output end of the power conversion circuit is a differential-mode inductor, and the filter inductor at the input end of the power conversion circuit is a common-mode inductor. In addition, if necessary, a filter inductor at the input end of the power transmission system and/or a filter inductor at the output end of the power transmission system may include at least one differential-mode inductor and at least one common-mode inductor, and the inductors may be connected in series or in parallel as required.

FIG. 9 is a schematic of a structure of a power transmission system according to a third embodiment of this application. As shown in FIG. 9, in the circuit transmission system, the at least one crossover capacitor group Cf includes a fourth crossover capacitor group Cf4, where a first capacitor group of the fourth crossover capacitor group Cf4 is Cf4', a second capacitor group of the fourth crossover capacitor group Cf4 is Cf4''. One end of the fourth crossover capacitor group Cf4 (which may include at least one of Cf4' and Cf4'') is coupled to a first node between two adjacent first filter inductors LT1 of the first filter circuit LC1, and the other end of the fourth crossover capacitor group Cf is coupled to a second node between two adjacent second filter inductors LT2 in the second filter circuit LC2.

In addition, a position of a crossover capacitor group other than the fourth crossover capacitor group Cf4 may be completely different from positions of the two ends of the fourth crossover capacitor group Cf4. Alternatively, another crossover capacitor group may be obtained by adjusting a position of one end of the fourth crossover capacitor group Cf4.

In an example, the at least one crossover capacitor group Cf may include a second crossover capacitor group (not shown in the figure). One end of the second crossover capacitor group is coupled to a first node between two adjacent first filter inductors LT1 of the first filter circuit LC1, and the other end of the second crossover capacitor group Cf is coupled to the output end of the power transmission system or the output end of the power conversion circuit 10. If the filter circuit includes the second filter circuit LC2, when the other end of the second crossover capacitor group is coupled to the output end of the power transmission system, the other end of the second crossover capacitor group is also coupled to the output end of the second filter circuit LC2; or when the other end of the second crossover capacitor group is coupled to the output end of the power conversion circuit 10, the other end of the second crossover capacitor group is also coupled to the input end of the second filter circuit LC2. If the filter circuit does not include the second filter circuit LC2, when the other end of the second crossover capacitor group is coupled to the output end of the power transmission system, the other end of the second crossover capacitor group is also coupled to the output end of the power conversion circuit 10, because when the filter circuit does not include the second filter circuit LC2, the output end of the power conversion circuit 10 is coupled to the output end of the power transmission system.

In still another example, the at least one crossover capacitor group Cf may include a third crossover capacitor group (not shown in the figure). One end of the third crossover capacitor group is coupled to the input end of the power transmission system or the input end of the power conversion circuit 10, and the other end of the third crossover capacitor group is coupled to a second node between two adjacent second filter inductors LT2 in the second filter circuit LC2. If the filter circuit includes the first filter circuit LC1, when the one end of the third crossover capacitor group is coupled to the input end of the power transmission system, the one end of the third crossover capacitor group is also coupled to the input end of the first filter circuit LC1; or when the one end of the third crossover capacitor group is coupled to the input end of the power conversion circuit 10, the one end of the third crossover capacitor group is also coupled to the output end of the first filter circuit LC1. If the filter circuit does not include the first filter circuit LC1, when the other end of the second crossover capacitor group is coupled to the input end of the power transmission system, the other end of the second crossover capacitor group is also coupled to the input end of the power conversion circuit 10 (because the filter circuit does not include the first filter circuit LC1, the input end of the power conversion circuit 10 is coupled to the input end of the power transmission system).

It should be noted that the power transmission system in this embodiment of this application may include one or two or more crossover capacitor groups in the foregoing embodiments. Besides, in addition to the first crossover capacitor group to the seventh crossover capacitor group, there may be another selection for positions of the two ends of the crossover capacitor group. Further, the two connection manners described in the power transmission system in the first embodiment are applicable to a specific connection manner of the two ends of each of the first crossover capacitor group to the seventh crossover capacitor group.

In addition, in FIG. 4 to FIG. 9, an example in which the filter circuit of the circuit transmission system includes the first filter circuit LC1 and the second filter circuit LC2 is mainly used for description. It may be understood that the filter circuit of the circuit transmission system may alternatively include only the first filter circuit LC1, or include only the second filter circuit LC2.

When the filter circuit includes only the first filter circuit LC1, the first filter inductor LT1 includes the first common-mode inductor T1 or includes the first differential-mode inductor L1 and the second differential-mode inductor L2, and the output end of the power conversion circuit 10 is coupled to the output end of the power transmission system. One end of each crossover capacitor group is coupled to the first filter circuit LC1, and the other end of the crossover capacitor group is coupled to the output end of the power transmission system or the output end of the power conversion circuit 10. For example, the one end of the crossover capacitor group is coupled to the input end of the first filter circuit LC1 (namely, the input end of the power transmission system). When the first filter circuit LC1 includes the two adjacent first filter inductors LT1, the one end of the crossover capacitor group may alternatively be coupled to the first node between the two adjacent first filter inductors LT1. In addition, if necessary, the one end of the crossover capacitor group may alternatively be coupled to the output end of the first filter circuit LC1 (namely, the input end of the power conversion circuit 10).

When the filter circuit includes only the second filter circuit LC2, the second filter inductor LT2 includes the second common-mode inductor T2 or includes the third differential-mode inductor L3 and the fourth differential-mode inductor L4, and the input end of the power conversion circuit 10 is coupled to the input end of the power transmission system. One end of each crossover capacitor group is coupled to the input end of the power transmission system, and the other end of the crossover capacitor group is coupled to the second filter circuit LC2. For example, the other end of the crossover capacitor group is coupled to the output end of the second filter circuit LC2 (namely, the output end of the power transmission system). When the second filter circuit LC2 includes the two adjacent second filter inductors LT2, the other end of the crossover capacitor group may alternatively be coupled to the second node between the two adjacent second filter inductors LT2. In addition, if necessary, the other end of the crossover capacitor group may alternatively be coupled to the input end of the second filter circuit LC2 (namely, the output end of the power conversion circuit 10).

In conclusion, when the Y capacitor is used for filtering, the Y capacitor needs to be grounded. In addition, a plurality of stages of modules in the power transmission system are accumulated, and a voltage increases. The Y capacitor needs to be a capacitor rated Y2 or above, which has a large volume, a small capacity, and a limited filtering capability. A filter inductor with a large inductance value needs to be selected, and a volume of the inductor is large, which causes high overall costs of a circuit, and affects an architecture and a thermal efficiency indicator. In embodiments of this application, the crossover capacitor group is disposed at an input filter circuit and an output filter circuit, to form the interference return path. Most interference returns to an interference source (namely, the power conversion circuit) through a return capacitor. In this way, when an external impedance is excessively small, there is no large common-mode current. For example, when a CE test is performed, a common-mode current flowing through a LISN can be reduced.

In other words, for a product based on a non-isolated architecture with a plurality of power ports, in an EMC test scenario, namely, a dual/multi-LISN test scenario, a crossover capacitor is added between filter circuits at an input end and an output end of a power conversion circuit for filtering, to form an internal interference return path and reduce an interference current of an external loop. In this way, an inductance value of a filter inductor can be reduced, which is conducive to reducing an overall volume and costs of the circuit. In addition, in this filtering solution, a Y capacitor does not need to be added to a housing, and a capacitor in a crossover capacitor group has a low withstand voltage and a large capacitance value, which can greatly reduce a volume and costs of the inductor. For example, in an example, the inductance value of the external filter inductor may range from 100 µH to 200 µH, which may represent a 25-fold to 100-fold reduction, so that the volume and the costs are greatly reduced.

The position of the crossover capacitor group Cf may have but is not limited to the following several selections: For example, the filter circuit includes the first filter circuit LC1 and the second filter circuit LC2. As shown in FIG. 4, the two ends of the first crossover capacitor group Cf1 may be respectively located on the outer sides of the first filter inductor LT1 and the second filter inductor LT2. As shown in FIG. 8, the two ends of the seventh crossover capacitor group Cf9 may be respectively located on inner sides of the first filter inductor LT1 and the second filter inductor LT2. As shown in FIG. 9, the two ends of the fourth crossover capacitor group Cf4 may be respectively located between the two adjacent first filter inductors LT1 and between the two adjacent second filter inductors LT2. If necessary, the position of the crossover capacitor group may alternatively be a plurality of combinations of the foregoing. For example, the one end of the crossover capacitor group is located at the input end or the output end of the first filter circuit LC1, and the other end of the crossover capacitor group is located between the two adjacent second filter inductors LT2. Alternatively, the one end of the crossover capacitor group is located at the input end or the output end of the second filter circuit LC2, and the other end of the crossover capacitor group is located between the two adjacent first filter inductors LT1.

In addition, the specific connection manner of the two ends of the crossover capacitor group Cf may include but is not limited to the following two connection manners: In the first connection manner, as shown in FIG. 4, FIG. 6, FIG. 8, and FIG. 9, the one end of the first capacitor group in the crossover capacitor group is coupled to one of the positive electrode and the negative electrode of the input end of the power transmission system, and the other end of the first capacitor group in the crossover capacitor group is coupled to one of the positive electrode and the negative electrode of the output end of the power transmission system. The one end of the second capacitor group in the crossover capacitor group is coupled to the other one of the positive electrode and the negative electrode of the input end of the power transmission system, and the other end of the second capacitor group in the crossover capacitor group is coupled to the other one of the positive electrode and the negative electrode of the output end of the power transmission system. The first capacitor group and/or the second capacitor group of the crossover capacitor group each may include one capacitor or at least two capacitors, and the at least two capacitors may be connected in series or in parallel. In the second connection manner, as shown in FIG. 7, the crossover capacitor group includes the third capacitor group Cf1‴ disposed at the input end of the power transmission system and the fourth capacitor group Cf1ʺʺ disposed at the output end of the power transmission system. The third capacitor group Cf1‴ and the fourth capacitor group Cf1ʺʺ are coupled by using a common point (not ground). In addition, if necessary, the connection manner of the two ends of the crossover capacitor group Cf may alternatively be a plurality of combinations of the foregoing connection manners.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A power transmission system, comprising:
a power conversion circuit, configured to perform power conversion on an input electrical signal;
a filter circuit, comprising a first filter circuit and a second filter circuit; and
at least one crossover capacitor group, wherein
the filter circuit comprises the first filter circuit and the second filter circuit, an input end of the first filter circuit is coupled to an input end of the power transmission system, an output end of the first filter circuit is coupled to an input end of the power conversion circuit, and the first filter circuit is configured to perform, at the input end of the power transmission system, filtering processing on an electrical signal generated by the power conversion circuit by performing power conversion; and an input end of the second filter circuit is coupled to an output end of the power conversion circuit, an output end of the second filter circuit is coupled to an output end of the power transmission system, and the second filter circuit is configured to perform, at the output end of the power transmission system, filtering processing on the electrical signal generated by the power conversion circuit by performing power conversion;
one end of each crossover capacitor group is coupled to the first filter circuit, and the other end of each crossover capacitor group is coupled to the second filter circuit; and
the first filter circuit comprises a first filter inductor, the second filter circuit comprises a second filter inductor, the first filter inductor is a first differential-mode inductor, and the second filter inductor is a second differential-mode inductor.

2. The power transmission system according to claim 1, wherein each crossover capacitor group is not grounded.

3. The power transmission system according to claim 1 or 2, wherein
each crossover capacitor group comprises a third capacitor group and a fourth capacitor group, the third capacitor group comprises a first capacitor and a second capacitor that are connected in series between a positive electrode of the input end of the power transmission system and a negative electrode of the input end of the power transmission system, the fourth capacitor group comprises a third capacitor and a fourth capacitor that are connected in series between a positive electrode of the output end of the power transmission system and a negative electrode of the output end of the power transmission system, and an intermediate node between the first capacitor and the second capacitor is coupled to an intermediate node between the third capacitor and the fourth capacitor.

4. The power transmission system according to claim 1 or 2, wherein
the at least one crossover capacitor group comprises a first crossover capacitor group, one end of the first crossover capacitor group is coupled to the input end of the power transmission system, and the other end of the first crossover capacitor group is coupled to the output end of the power transmission system; and
the crossover capacitor group comprises:
a first capacitor group, wherein one end of the first capacitor group is coupled to one of a positive electrode of the input end of the power transmission system and a negative electrode of the input end of the power transmission system, and the other end of the first capacitor group is coupled to one of a positive electrode of the output end of the power transmission system and a negative electrode of the output end of the power transmission system; and/or
a second capacitor group, wherein one end of the second capacitor group is coupled to the other one of the positive electrode of the input end of the power transmission system and the negative electrode of the input end of the power transmission system, and the other end of the second capacitor group is coupled to the other one of the positive electrode of the output end of the power transmission system and the negative electrode of the output end of the power transmission system, wherein
the first capacitor group and the second capacitor group each comprise one capacitor or at least two capacitors, and the at least two capacitors are connected in series or in parallel.

5. The power transmission system according to any one of claims 1 to 4, wherein
the first filter circuit comprises a first filter capacitor and one or at least two serially-connected first filter inductors, an input end of the one or at least two serially-connected first filter inductors is the input end of the first filter circuit, an output end of the one or at least two serially-connected first filter inductors is the output end of the first filter circuit, the first filter capacitor is disposed at at least one of the input end of the first filter circuit, the output end of the first filter circuit, and a position between at least two adjacent first filter inductors, one end of the first filter capacitor is coupled to the positive electrode of the input end of the power transmission system, and the other end of the first filter capacitor is coupled to the negative electrode of the input end of the power transmission system; and/or
the second filter circuit comprises a second filter capacitor and one or at least two serially-connected second filter inductors, an input end of the one or at least two serially-connected second filter inductors is the input end of the second filter circuit, an output end of the one or at least two serially-connected second filter inductors is the output end of the second filter circuit, the second filter capacitor is disposed at at least one of the input end of the second filter circuit, the output end of the second filter circuit, and a position between at least two adjacent second filter inductors, one end of the second filter capacitor is coupled to the positive electrode of the output end of the power transmission system, and the other end of the second filter capacitor is coupled to the negative electrode of the output end of the power transmission system.

6. The power transmission system according to any one of claims 1 to 5, wherein
an electrical signal received by the input end of the power transmission system is a direct current signal, and the power conversion circuit is configured to convert the direct current signal into another direct current signal or into an alternating current signal; or
an electrical signal received by the input end of the power transmission system is an alternating current signal, and the power conversion circuit is configured to convert the alternating current signal into a direct current signal.

7. A power generation system, comprising:
a power supply device, configured to provide an electrical signal, wherein the electrical signal is a direct current signal or an alternating current signal; and
the power transmission system according to any one of claims 1 to 6, wherein the input end of the power transmission system is capable of receiving the electrical signal output by the power supply device.

8. The power generation system according to claim 7, wherein the power supply device is a photovoltaic panel, the photovoltaic panel is configured to convert received sunlight into electric energy to provide a direct current signal, and the power conversion circuit comprises:
a power optimizer, wherein the power optimizer is configured to perform power optimization, to convert the direct current signal provided by the photovoltaic panel into a direct current signal that outputs maximum power.

9. The power generation system according to claim 7, wherein the power supply device is an alternating current power grid, the alternating current power grid is configured to provide an alternating current signal, and the power conversion circuit is configured to convert the alternating current signal into a direct current signal.
